**Europäisches Patentamt**

**European Patent Office**

**Office européen des brevets**

(11) Publication number : **0 327 241 B1**

## (12) EUROPEAN PATENT SPECIFICATION

(45) Date of publication of patent specification :
15.07.92 Bulletin 92/29

(51) Int. Cl.⁵ : **C03B 9/40, C03B 11/16**

(21) Application number : **89300643.7**

(22) Date of filing : **24.01.89**

(54) **Glass forming machine.**

(30) Priority : **05.02.88 US 152686**

(43) Date of publication of application :
**09.08.89 Bulletin 89/32**

(45) Publication of the grant of the patent :
**15.07.92 Bulletin 92/29**

(84) Designated Contracting States :
**DE FR GB IT**

(56) References cited :
**DE-A- 3 151 521**
**US-A- 4 613 352**
**US-A- 4 662 923**

(73) Proprietor : **Emhart Glass Machinery Investments Inc.**
**c/o RL&F Service Corp. One Rodney Square,**
**10th Floor 10th and King Streets**
**Wilmington, Delaware 19801 (US)**

(72) Inventor : **Pinkerton, Steven James**
**55 Revere Drive**
**Ridgefield Connecticut 06877 (US)**
Inventor : **Mungovan, John P.**
**67 Winterset Lane**
**Simsbury Connecticut 06070 (US)**
Inventor : **Suomala, John E.**
**17 Simsbury Manor Drive**
**Weatogue Connecticut 06089 (US)**
Inventor : **Austin, Stephen A.**
**60-93 Old Town Road**
**Vernon Connecticut 06066 (US)**

(74) Representative : **Wetters, Basil David Peter et al**
**Emhart Patents Department Lyn House 39 The Parade**
**Oadby, Leicester LE2 5BB (GB)**

## Description

The present invention relates to the simultaneous forming of gobs of molten glass into parisons in a multi-gob, individual section, glass forming machine.

US-A-4551163 discloses an apparatus for simultaneously delivering discrete gobs of molten glass to mould assemblies of a multi-gob, individual section glass forming machine and comprises a feeder bowl having an orifice plate with a number of openings corresponding to the number of mould assemblies in each section, a corresponding number of needles individually displaceable to vary the volume of a stream of glass passing through each of the openings and shear means for shearing a gob from each of the streams. The position of each of the needles relative to its corresponding opening is mechanically adjustable, thus to adjust the volume of the stream issuing from the opening.

US-A-4662923 discloses a plunger mechanism for use in an individual section glass forming machine in combination with a mould assembly comprising a plunger displaceable from a retracted position to a fully inserted position, means for displacing the plunger from its retracted to its fully inserted position and means for sensing the position of the plunger throughout at least the last portion of its displacement. The movement of the plunger is controlled in response to the sensing means so that the plunger moves according to a predetermined position against time curve. It is suggested in US-A-4662923 that a signal from the sensing means indicating the operative position of the plunger may be used to control the quantity of glass introduced into the mould assembly, but no means for carrying this out is described, and the "operative position" of the plunger is indeterminate, being defined as the position in which the plunger is in engagement with the glass, which is a range of positions rather than a specified position.

EP-A-50765 discloses a double gob glass forming machine, and for each mould assembly of such a machine shows a plunger, displaceable from a retracted position to a fully inserted position, means for displacing the plunger from the retracted to the fully inserted position, means for sensing the actual position of the plunger through at least the last portion of its displacement, means for simultaneously delivering a discrete gob of molten glass to the mould assembly comprising a feeder bowl having an orifice plate with an opening, a needle displaceable to vary the volume of a stream of glass pasing through the opening and shear means for shearing a gob from the stream. Means is provided to adjust the height of a refractory tube in the feeder bowl in response to the maximum penetration depth of the plunger into the mould assembly, thus to provide an overall control of the amount of glass provided to the moulds.

None of the previously proposed arrangements suggest the continuous individual control of the gob delivered to each mould assembly of a multi-gob glass forming machine. But not only is it desirable to control the amount of glass fed to each mould assembly but also it is desirable to ensure that an appropriate criterion for determining the amount of glass is provided. In a multi cavity machine the final penetration of the plunger is not only dependent on the amount of glass in the cavity of the mould; different cooling rates of different mould cavities, any tendency of the mould cavity to open and other factors may also influence the final penetration.

If the penetration of the plonger is plotted against time it is found that the plunger advance into the cavity along a curve until a parison formation point is reached, after which a small, constant velocity, movement of the plunger takes place, which is believed to result from the glass in the mould cooling, that is to say, shrinking. The parison formation point is therefore a criterion of the amount of glass in the mould cavity which is independent of the cooling rate of the mould cavity, and is believed to indicate precisely when the mould cavity is filled.

It is an object of the present invention to increase the uniformity of the product made by a multi-gob, individual section, glass forming machine.

According to the present invention there is provided a multi-gob glass forming machine comprising; a plurality of parison mould assemblies each including a plunger displaceable from a retracted position to a fully inserted position, means for displacing each plunger from said retracted to said fully inserted position, said plungers advancing to a parison formation point where the mould cavity has become completely full and then to a fully inserted position as the formed parison cools, means for sensing the actual position of each of said plungers throughout at least the last portion of its displacement which includes the parison formation point and means for simultaneously delivering discrete gobs of molten glass to said parison mould assemblies including a feeder bowl having an orifice plate with a corresponding plurality of openings, and a corresponding plurality of needles individually displaceable to vary the volume of a stream of glass passing through the corresponding orifice, and shear means for simultaneously shearing a gobe from each of the streams, and a Positioner Controller for each plunger, each Positioner Controller comprising (a) manually inputtable means for defining the location where the parison formation point for the associated parison mould assembly should be located: (b) means for determining the location of the actual parison formation point for its associated plunger by determining when the displacement curve for such plunger becomes linear, (c) means for comparing the location of the actual parison formation point with the manually inputted desired parison formation point, and (d) means for providing a signal to the associated needle to displace said needle to adjust the volume of the stream of glass controlled by said needle and therefore the size of the gob provided to the associated mould assembly to relocate the parison formation point to the desired parison formation point.

The following description to be read with reference to the drawings, illustrates a presently preferred embodiment incorporating the principles of the invention.

Referring to the drawings:

Figure 1 is a diagrammatic view of one of the parison mould assemblies of an individual section, glass forming machine;

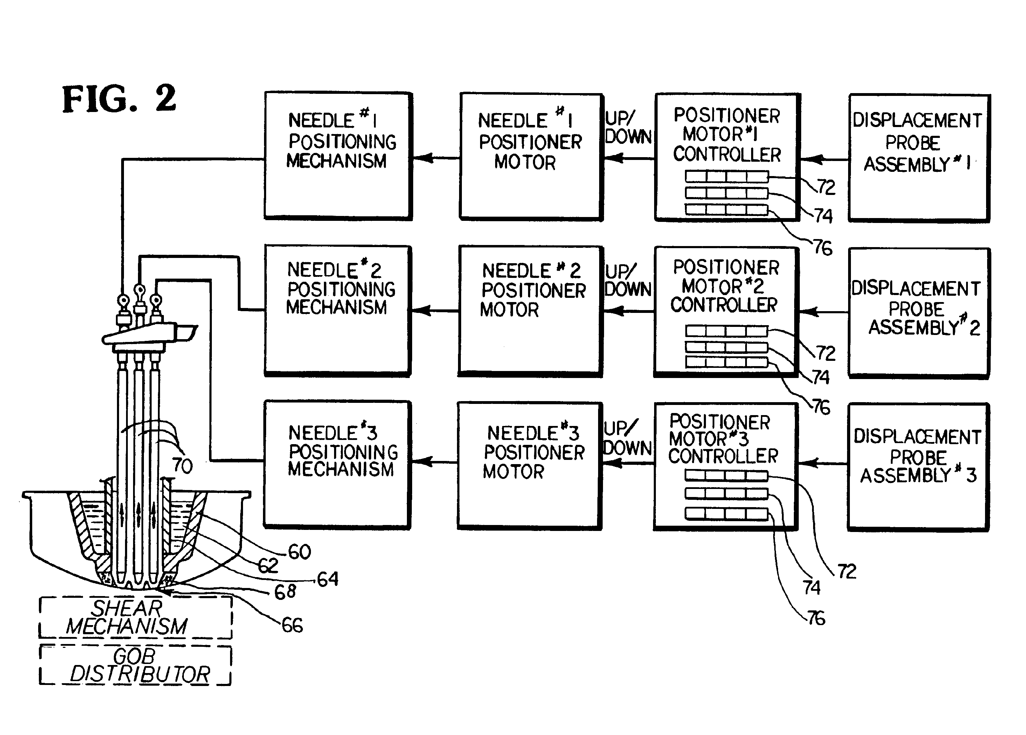

Figure 2 is a partially schematic, partially diagrammatic illustration of a glass feeder mechanism which feeds gobs of molten glass to and receives positional data from a triple gob, individual section, glass forming machine; and

Figure 3 is a graph illustrating the final portion of the movement of the mould assembly plunger in forming a parison.

A glassware forming machine of the individual section, multi-gob type, has a number of individual sections each having a selected number (usually 2, 3 or 4) of parison mould assemblies 10 for simultaneously forming a corresponding number of parisons. Each of these mold assemblies 10 includes two mold halves 11 which are movable between an advanced position where they engage one another and other parts of the mold assembly to form a mold cavity 12 and a retracted position where the mold halves 11 are spaced to permit removal of a formed parison. A neck ring 14 cooperates with the mold halves 11 to define the cavity 12 and is arranged to grip the neck portion of a formed parison so that the parison can be transferred from the mold cavity to a blow mold. A baffle 16, movable into a position on top of the engaging mold halves 11, defines the upper surface of the mold cavity and is moved to a remote location prior to parison removal.

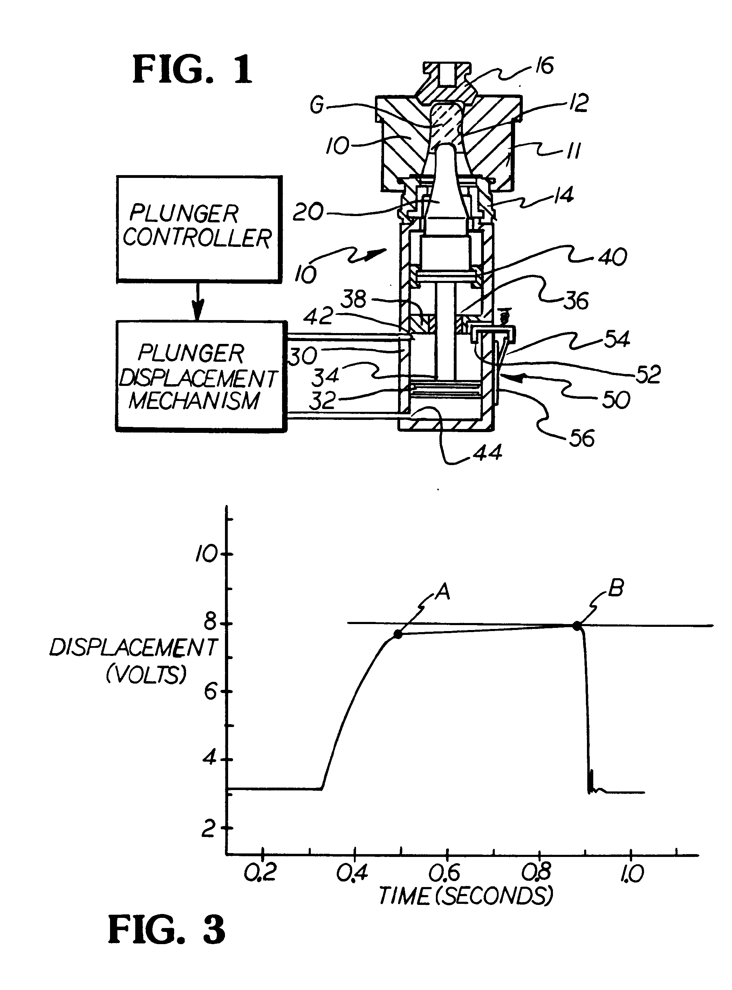

Each mold assembly also has a plunger mechanism including a plunger 20. The plunger 20 is first moved from its out-of-the-way position to its intermediate position where the plunger projects upwardly into the mold cavity. A gob of molten glass is dropped into the mold cavity 12 and rests on the plunger 20. The plunger is then advanced under a variable feed pressure from this intermediate position to press the glass against the walls of the cavity 12 to form the parison. In Figure 1 the plunger is shown during its advancement from the intermediate position to its fully advanced position. The plunger is then retracted to its intermediate position by cutting the feed pressure and applying a retract pressure and then retracted from the intermediate position to the out-of-the-way position to allow for removal of the parison.

The plunger mechanism also has a cylinder 30, a piston 32 movable in the cylinder 30, and a piston rod 34 projecting from the piston 32 through a seal 36 in an upper end cap 38 of the cylinder 30. The plunger 20 is mounted on an upper end portion of the piston rod 34 by a clamping ring 40. Pressurized hydraulic fluid introduced into the cylinder 30 through an upper entry port 42 causes the piston 32 to move downwards in the cylinder 30, and the introduction of the fluid through port 44 causes the piston 32 to move upwardly in the cylinder 30.

Each parison mold assembly also has a Plunger Displacement Mechanism (a valving arrangement which can alternately apply the feed and retract pressures to the appropriate cylinder ports 42, 44). The time when each pressure is applied and other control parameters such as duration of application are controlled by a Plunger Controller.

A feeder bowl 60 contains molten glass 62 received from a forehearth (not shown). The molten glass 62 flows below a refractory tube 64 and is discharged through holes 66 in an orifice plate 68 as runners of molten glass. These runners are simultaneously sheared into discrete gobs by a Shear Mechanism and are delivered by a Gob Distributor to the parison mold assemblies. Needles 70 are individually movable upward and downward by Positioning Mechanisms driven by Positioner Motors to vary the size of the glass stream, and hence, the size of the gobs. Details of conventional, manually operable Positioning Mechanisms for raising or lowering the needles are disclosed in U.S. Patent No. 4,551,163, dated November 5, 1985.

It is within the last 3/8" of plunger pressing stroke, that the mold cavity becomes completely filled in the parison forming process. To track the displacement of each plunger throughout this portion of the stroke, each Parison Mold Assembly includes a Displacement Probe Assembly having a linear potentiometer 50 (Figure 1) secured to the plunger cylinder 30. As a plunger is displaced through this 3/8", the piston 32 of that plunger will engage and displace a probe 52 to which is secured a wiper 54 of the potentiometer. The displacement of this wiper 54 along a potentiometer element 56 changes the output of the linear potentiometer.

Figure 3 illustrates a plot of plunger displacement (voltage), as sensed by the probe, versus time, zero seconds being when the Plunger Controller commences plunger displacement (fires "plunger-up" solenoid, for example). This plot reveals a linear or constant velocity region between points A and B. Since the pressure is constant during this plunger advancement, the force exerted on the glass by the plunger remains constant. It is believed that point A is the point where the mold cavity has completely filled (the parison formation point) and that from point A and B, the glass is cooling, and hence, shrinking. Point B corresponds to the time when the Plunger Controller commences plunger retraction (fires "plunger-down" solenoid, for example).

The Positioner Motor Controller for each needle receives positional data from its associated Displacement Probe Assembly, determines when Point A has been reached (has determined that the displacement curve has become linear), compares this location to a desired Point A location inputted via thumb wheel switches or the like 72 and drives the Positioner Motor to raise or lower the associated needle 70 to change the volume of the stream of glass issuing from the hole 66 controlled by the needle 70 and hence the volume of the gob formed therefrom, to relocate the location of the actual parison formation point of the plunger to the desired Point A location inputted by the operator. Each Positioner Motor Controller may include a digital read out 74 of the actual Point A location. In a semi-automatic system, a thumb wheel switch or the like 76 may be provided for manually inputting needle offsets into the needle Positioner corresponding to the difference between digital read out 72 and thumb wheel switch 74 to relocate the associated needle to the desired Point A location. Such height adjustments to the needles 70 will maintain a constant parison weight, and will automatically adjust weights between multiple gobs such that all will be of equal value.

## Claims

1. A multi-gob glass forming machine comprising a plurality of parison mould assemblies (10) each including a plunger (20) displaceable from a retracted position to a fully inserted position,

means (32, 34) for displacing each plunger (20) from said retracted to said fully inserted position, said plungers advancing to a parison formation point where the mould cavity has become completely full and then to a fully inserted position as the formed parison cools,

means (50) for sensing the actual position of each of said plungers (20) throughout at least the last portion of its displacement which includes the parison formation point and

means for simultaneously delivering discrete gobs of molten glass to said parison mould assemblies including a feeder bowl (60) having an orifice plate (68) with a corresponding plurality of openings (66), and a corresponding plurality of needles (70) individually displaceable to vary the volume of a stream of glass passing through the corresponding orifice, and shear means for simultaneously shearing a gob from each of the streams, and a Positioner Controller for each plunger, each Positioner Controller comprising

(a) manually inputtable means (72, 74, 76) for defining the location where the parison formation point for the associated parison mould assembly should be located,

(b) means for determining the location of the actual parison formation point for its associated plunger, by determining when the displacement curve for such plunger becomes linear,

(c) means for comparing the location of the actual parison formation point with the manually inputted desired parison formation point and

(d) means for providing a signal to the associated needle (70) to displace said needle to adjust the volume of the stream of glass controlled by said needle and therefore the size of the gob provided to the associated mould assembly to relocate the parison formation point to the desired parison formation point.

2. A multi-gob glass forming machine according to claim 1, characterized in that each of the means for sensing the position of the plungers comprises a linear potentiometer (52, 54, 56).

## Patentansprüche

1. Glasformmaschine mit einer Vielzahl von Külbel-Formanordnungen (10), von denen jede einen Plunger (20) umfaßt, der aus einer zurückgezogenen Lage in eine vollständige Einsatzlage verschiebbar ist,

mit einer Einrichtung (32, 34) zum Verschieben des Plungers (20) aus der zurückgezogenen in die Einsatzlage, wobei die Plunger zu einem Külbel-Formationspunkt, wenn der Formhohlraum vollständig gefüllt ist, und dann zu einer vollständigen Einsatzlage bewegbar sind, wenn sich das geformte Külbel abkühlt,

mit einer Einrichtung (50) zum Abfühlen der tatsächlichen Position eines jeden Plungers (20) in wenigstens dem letzten Abschnitt seiner Verschiebung, wobei die Position den Külbel-Formationspunkt einschließt,

mit einer Einrichtung zum gleichzeitigen Liefern einzelner Tropfen geschmolzenen Glases zu den Külbel-Formanordnungen, wobei ein Speisebehälter (60), eine Platte (68) mit einer entsprechenden Vielzahl von Öffnungen (66) und eine entsprechende Vielzahl von Nadeln (70) vorgesehen sind, die im einzelnen verschiebbar sind, um das Volumen des durch die entsprechende Öffnung fließenden Glasstromes zu variieren, mit einer Schereinrichtung zum gleichzeitigen Abscheren eines Tropfens von jedem Glasstrom, und mit einem Positionsregler für jeden Plunger, wobei jeder Positionsregler

a) eine manuell betätigbare Einrichtung (72, 74, 76) zum Definieren der Stelle, an welcher der Külbel-Formationspunkt für die zugeordnete Külbel-Formanordnung angeordnet sein soll,

b) eine Einrichtung zum Bestimmen der Lage des tatsächlichen Külbel-Formationspunktes für den zugeordneten Plunger durch Bestimmen, wenn die Verschiebungskurve für diesen Plunger linear wird,

c) eine Einrichtung zum Vergleichen der Lage des tatsächlichen Külbel-Formationspunktes mit dem manuell eingegebenen gewünschten Külbel-Formationspunkt und

d) eine Einrichtung umfaßt, welche für die zugeordnete Nadel (70) ein Signal zum Verschieben der Nadel schafft, um das Volumen des von der Nadel geregelten Glasstromes und demzufolge die Größe des zur zugeordneten Formanordnung gelieferten Tropfens einzustellen und um den Külbel-Formationspunkt zu dem gewünschten Külbel-Formationspunkt zu verstellen.

2. Glasformmaschine nach Anspruch 1, dadurch gekennzeichnet, daß jede Einrichtung zum Erfassen der Position der Plunger ein Linear-Potentiometer (52, 54, 56) umfaßt.

## Revendications

1. Machine à mouler du verre multiparaison comprenant : une pluralité d'ensembles de moules d'ébauche (10), dont chacun comprend un plongeur (20) pouvant se déplacer d'une position rétractée à une position entièrement enfoncée ;

des moyens (32, 34) servant à déplacer chaque plongeur (20) de cette position rétractée à cette position entièrement enfoncée, ces plongeurs avançant jusqu'à un point de formation d'une ébauche, où la cavité du moule a été entièrement emplie et, ensuite, à une position entièrement enfoncée, lorsque l'ébauche formée se refroidit ;

des moyens (50) servant à capter la position réelle de chacun de ces plongeurs (20) sur au moins toute la dernière partie de son déplacement, qui comprend le point de formation de l'ébauche ; et

des moyens servant à délivrer simultanément des paraisons discrètes de verre fondu à ces ensembles de moules d'ébauche, qui comprennent : une cuvette alimentatrice (60) possédant une plaque à orifice (68) munie d'une collection correspondante de trous (66) ; et une série correspondante d'aiguilles (70) qui peuvent se déplacer individuellement pour faire varier le volume d'un courant de verre qui traverse le trou correspondant ; et des moyens de cisaillement qui servent à tronçonner simultanément une paraison dans tous les courants ; et un Contrôleur Positionneur pour chaque plongeur, chaque Contrôleur Positionneur comprenant ;

(a) des moyens (72, 74, 76) pouvant recevoir manuellement une information pour définir l'emplacement où doit être situé le point de formation de l'ébauche pour l'ensemble de moule d'ébauche correspondant ;

(b) des moyens servant à déterminer l'emplacement du point réel de formation de l'ébauche pour son plongeur particulier en déterminant l'instant où la courbe de déplacement correspondant à ce plongeur devient linéaire ;

(c) des moyens servant à comparer l'emplacement du point réel de formation de l'ébauche au point désiré de consigne saisi manuellement, de formation de l'ébauche qui a été entré manuellement ; et

(d) des moyens servant à fournir à l'aiguille (70) correspondante un signal pour la déplacer de façon à ajuster le volume du courant de verre commandé par cette aiguille et, par conséquent, la dimension de la paraison fournie à l'ensemble de moule particulier pour repositionner le point de formation de l'ébauche au point désiré de consigne de formation de l'ébauche.

2. Machine à mouler du verre multiraraison selon la revendication 1, caractérisée en ce que chacun des moyens (6) servant à capter la position des plongeurs comprend un potentiomètre linéaire (52, 54, 56).

# FIG. 1

PLUNGER CONTROLLER

PLUNGER DISPLACEMENT MECHANISM

G
16
12
10
11
20
14
10
40
38
36
42
30
54
34
52
32
50
44
56

DISPLACEMENT (VOLTS)

A

B

TIME (SECONDS)

# FIG. 3

# FIG. 2

| | | | | |
|---|---|---|---|---|
| NEEDLE #1 POSITIONING MECHANISM | ← | NEEDLE #1 POSITIONER MOTOR | ← UP/DOWN | POSITIONER MOTOR #1 CONTROLLER | ← | DISPLACEMENT PROBE ASSEMBLY #1 |

72
74
76

| NEEDLE #2 POSITIONING MECHANISM | ← | NEEDLE #2 POSITIONER MOTOR | ← UP/DOWN | POSITIONER MOTOR #2 CONTROLLER | ← | DISPLACEMENT PROBE ASSEMBLY #2 |

72
74
76

| NEEDLE #3 POSITIONING MECHANISM | ← | NEEDLE #3 POSITIONER MOTOR | ← UP/DOWN | POSITIONER MOTOR #3 CONTROLLER | ← | DISPLACEMENT PROBE ASSEMBLY #3 |

72
74
76

70

60
62
64
68
66

SHEAR MECHANISM

GOB DISTRIBUTOR

EP 0 327 241 B1